# EUROPÄISCHE PATENTSCHRIFT

(11) **EP 2 717 277 B1**
(45) Veröffentlichungstag und Bekanntmachung des Hinweises auf die Patenterteilung: **12.12.2018**
(21) Anmeldenummer: 13187051.1
(22) Anmeldetag: 02.10.2013
(51) Int. Cl.: H01F 6/00, H01F 6/06, H02H 9/02

(54) **Induktiver Fehlerstrombegrenzer mit geteilter Primärspulenanordnung**
Inductive fault current limiter with split primary coil assembly
Limiteur de courant de défaut inductif avec agencement de bobine primaire séparé

(30) Priorität: 05.10.2012 DE 102012218261
(43) Veröffentlichungstag der Anmeldung: 09.04.2014
(73) Patentinhaber: Bruker HTS GmbH, 63450 Hanau (DE)
(72) Erfinder: Schlenga, Klaus, 76351 Linkenheim-Hochstetten (DE); Usoskin, Alexander, 63456 Hanau (DE)
(74) Vertreter: Kohler Schmid Möbus Patentanwälte

(56) Entgegenhaltungen:
- EP-A1- 2 402 961
- WO-A1-2013/017159
- DE-A1- 19 524 579
- FR-A1- 2 691 591
- US-A- 5 379 020

## Beschreibung

Die Erfindung betrifft einen induktiver Fehlerstrombegrenzer, umfassend
- eine normalleitende Primärspulenanordnung mit einer Vielzahl von Windungen, und
- eine supraleitende, kurzgeschlossene Sekundärspulenanordnung,
   wobei die Primärspulenanordnung und die Sekundärspulenanordnung zumindest im Wesentlichen koaxial zueinander und zumindest teilweise ineinander geschachtelt angeordnet sind, wobei die Primärspulenanordnung eine erste Spulensektion und eine zweite Spulensektion umfasst,
   wobei die Windungen der ersten Spulensektion der Primärspulenanordnung radial innerhalb der Sekundärspulenanordnung angeordnet sind,
   und wobei die Windungen der zweiten Spulensektion der Primärspulenanordnung radial außerhalb der Sekundärspulenanordnung angeordnet sind, und wobei die Sekundärspulenanordnung eine erste Spulensektion und eine zweite Spulensektion umfasst, wobei die erste Spulensektion der Sekundärspulenanordnung radial innerhalb der zweiten Spulensektion der Sekundärspulenanordnung angeordnet ist.

Ein solcher induktiver Fehlerstrombegrenzer ist aus der FR 2 691 591 A1 bekannt geworden.

Fehlerstrombegrenzer werden eingesetzt, um im Falle von Kurzschlüssen den aus einer Quelle gezogenen Strom zu beschränken. Mit supraleitenden Fehlerstrombegrenzern können auch vergleichsweise hohe Stromstärken, etwa in öffentlichen elektrischen Versorgungsnetzen, besichert werden.

Supraleitende Fehlerstrombegrenzer vom Gleichstromtyp umfassen z. B. einen supraleitenden Leitungsabschnitt, durch welchen der zu begrenzende Strom fließt. Steigt die Stromstärke infolge eines Kurzschlusses an, wird der kritische Strom im supraleitenden Leitungsabschnitt überschritten, so dass dieser normalleitend wird ("Quench"), wodurch sich der Widerstand stark erhöht. Dadurch sinkt die Stromstärke, die durch den Leitungsabschnitt fließt, entsprechend ab. Diese Art der Strombegrenzer wird auch als resistiver Typ bezeichnet.

Supraleitende Fehlerstrombegrenzer für Wechselstromanwendungen können sowohl als resistive als auch induktive Fehlerstrombegrenzer ausgeführt werden. Induktive Fehlerstrombegrenzer werden im Wesentlichen durch induktiv gekoppelte Windungen ausgebildet. Durch eine normalleitende Primärspulenanordnung ("Primärseite") fließt hierbei der zu begrenzende Wechselstrom, und in einer supraleitenden Sekundärspulenanordnung ("Sekundärseite") wird ein Strom induziert, der dem magnetischen Fluss, welcher durch den Strom in der Primärspulenanordnung erzeugt wird, entgegenwirkt. Dadurch wird die Induktivität der Primärspulenanordnung weitgehend aufgehoben. Steigt der zu begrenzende Wechselstrom in der Primärspulenanordnung infolge eines Kurzschlusses an, so erhöht sich auch der induzierte Strom in der Sekundärspulenanordnung, bis der kritische Strom in der Sekundärspulenanordnung überschritten ist und die Sekundärspulenanordnung normalleitend wird ("Quench"). Im normalleitenden Zustand der Sekundärspulenanordnung kompensiert deren Strom nur noch einen geringen Teil des magnetischen Flusses der Primärspulenanordnung, wodurch wiederum die Induktivität der Primärspulenanordnung ansteigt. Diese Erhöhung des induktiven Widerstands begrenzt den Strom durch die Primärspulenanordnung.

Aus der EP 2 402 961 A1 ist ein induktiver Fehlerstrombegrenzer bekannt geworden, bei dem radial innerhalb der Primärspule umfassend mehrere Windungen eine Sekundärspule, die als supraleitender, kurzgeschlossener Ring ausgebildet ist, eingestellt ist. Aus der DE 10 2010 007 087 A1 ist ein induktiver Fehlerstrombegrenzer bekannt geworden, bei dem innerhalb einer Primärspule ein Kryostat mit einer Sekundärspule angeordnet ist. Aus der DE 196 28 358 C1 (sowie aus der US 5 140 290 A, US 6 795 282 B2, US 7 586 717 B2, US 5 694 279 A, DE 195 24 579 A1, US 5 379 020 A) ist es bekannt geworden, eine Primärspule und eine Sekundärspule nebeneinander anzuordnen und über einen ringförmigen Eisenkern zu koppeln.

Die Effizienz eines induktiven Fehlerstrombegrenzers bemisst sich nach dem Induktivitätsverhältnis der Primärspulenanordnung bei einerseits supraleitender Sekundärspulenanordnung ("Normalbetrieb") und andererseits normalleitender Sekundärspulenanordnung ("Fehlerbetrieb"). Im Fehlerbetrieb soll der Strom in der Primärspulenanordnung möglichst stark gegenüber dem Normalbetrieb reduziert werden, entsprechend einem hohen Induktivitätsverhältnis.

Die FR 2 691 591 A1 beschreibt einen induktiven Fehlerstrombegrenzer mit einer normalleitenden Primärwicklung umfassend zwei in Serie verbundene Spulenabschnitte, wobei radial zwischen diesen Spulenabschnitten eine supraleitende Sekundärwicklung angeordnet ist. Die Sekundärwicklung umfasst zwei radial ineinander geschachtelte Schichten, die jeweils auf isolierenden Trägern angeordnet und über einen Kurzschlusspunkt auf Masse gelegt sind.

### Aufgabe der Erfindung

Der Erfindung liegt die Aufgabe zugrunde, einen Fehlerstrombegrenzer, bei dem die Sekundärspulenanordnung vor einem Durchbrennen im Quenchfall geschützt ist, mit erhöhtem Induktivitätsverhältnis zur Verfügung zu stellen.

### Kurze Beschreibung der Erfindung

Diese Aufgabe wird gelöst durch einen induktiven Fehlerstrombegrenzer der eingangs genannten Art, der dadurch gekennzeichnet ist, dass eine normalleitende Shunt-Anordnung radial zwischen der ersten Spulensektion und der zweiten Spulensektion der Sekundärspulenanordnung angeordnet ist.

Gemäß der Erfindung wird die Primärspulensektion radial in (zumindest) zwei Spulensektionen aufgeteilt, und die Sekundärspulenanordnung wird radial zwischen diesen zwei Spulensektionen der Primärspulenanordnung angeordnet.

Für eine hohe Effizienz eines induktiven Fehlerstrombegrenzers muss im Normalbetrieb der magnetische Fluss der Primärspulenanordnung möglichst vollständig durch den in der Sekundärspulenanordnung induzierten magnetischen Fluss aufgehoben werden. Dazu sollte die Sekundärspulenanordnung möglichst nahe an die Primärspulenanordnung heranrücken, was aufgrund von konstruktionstechnischen Randbedingungen, wie z. B. den Wandstärken und -abständen eines Kryostatenbehälters für die supraleitende Sekundärspulenanordnung und der endlichen radialen Ausdehnung der Spulenanordnungen, nicht einfach zu erreichen ist. Bei induktiven Fehlerstrombegrenzern für höhere Ströme (etwa in öffentlichen elektrischen Versorgungsnetzen) haben die Primärspulenanordnung und auch die Sekundärspulenanordnung eine erhebliche Dicke, so dass oft ein erheblicher Teil der Windungen der Primärspulenanordnung deutlich von der Sekundärspulenanordnung beabstandet ist und dadurch die vollständige Kompensation der o.g. Flüsse praktisch unmöglich ist.

Durch die Aufteilung der Primärspulenanordnung in mehrere Spulensektionen und das Einschieben der Sekundärspulenanordnung kann dieser Abstand trotz größerer radialer Gesamtausdehnung effektiv verkleinert werden. Dadurch wird die Kompensation des magnetischen Flusses der Primärspulenanordnung durch die Sekundärspulenanordnung im Normalbetrieb verbessert bzw. es wird ein höheres Induktivitätsverhältnis erreicht.

Mit der Shunt-Anordnung kann ein Durchbrennen (insbesondere Schmelzen) des Supraleiters im Quenchfall verhindert werden; die Shunt-Anordnung stellt einen gegenüber der gequenchten Sekundärspulenanordnung parallelen Strompfad mit geringem Widerstand zur Verfügung, so dass der Strom aus der Sekundärspulenanordnung in die Shunt-Anordnung ausgeleitet werden kann. Allerdings können in einer Shunt-Anordnung im Normalbetrieb auch Wirbelströme induziert werden. Dadurch steigt die erforderliche Kühlleistung an und es kann auch eine merkliche Streuinduktivität der Primärspulenanordnung auftreten, wodurch das Induktivitätsverhältnis sinkt. Durch eine Positionierung der Shunt-Anordnung radial zwischen zwei Spulensektionen der supraleitenden Sekundärspulenanordnung kann die Shunt-Anordnung gegenüber den beiden' radial innen und außen benachbarten Spulensektionen der Primärspulenanordnung effektiv abgeschirmt werden, so dass Wirbelströme in der Shunt-Anordnung minimiert sind. Typischerweise stellen sowohl die erste Spulensektion als auch die zweite Spulensektion der Sekundärspulenanordnung jeweils für sich mindestens einen supraleitend kurzgeschlossenen Strompfad zur Verfügung.

Die Spulensektionen der Primärspulenanordnung sind elektrisch so verschaltet, dass sich die B-Felder der Spulensektionen im inneren Bereich der radial inneren Spulensektion addieren, wobei die Spulensektionen in der Regel in Serie geschaltet sind. Die Windungen sind typischerweise aus Kupfer gefertigt. Die Sekundärspulenanordnung umfasst mindestens eine supraleitend kurzgeschlossene Leiterschleife. In der Sekundärspulenanordnung können insbesondere bandförmige Supraleiter ("coated conductors") eingesetzt werden; es können aber auch Supraleiterdrähte mit Supraleiterfilamenten etwa aus Nb₃Sn, NbTi oder MgB₂ eingesetzt werden. Die Sekundärspulenanordnung ist durch die normalleitende Shunt-Anordnung (typischerweise in Ringform) vor einem Durchbrennen im Quenchfall geschützt. Die Sekundärspulenanordnung ist typischerweise zur Kühlung in einem Kryostaten angeordnet, der beispielsweise mit flüssigem Helium oder flüssigem Stickstoff gekühlt wird.

### Bevorzugte Ausführungsformen der Erfindung

Bei einer vorteilhaften Ausführungsform des erfindungsgemäßen Fehlerstrombegrenzers ist die Sekundärspulenanordnung mittig zwischen einer innersten Windungslage der ersten Spulensektion der Primärspulenanordnung und einer äußersten Windungslage der zweiten Spulensektion der Primärspulenanordnung angeordnet. Dadurch kann eine sehr gute Kompensation des magnetischen Flusses der Primärspulenanordnung erreicht werden. Falls die Windungsdichte und/oder die Zahl der Windungen in den verschiedenen Spulensektionen der Primärspulenanordnung stark unterschiedlich ist, kann alternativ auch die Sekundärspulenanordnung so positioniert werden, dass der mittlere radiale Abstand zwischen den Windungen der Primärspulenanordnung und der Sekundärspulenanordnung minimiert wird. Falls die Sekundärspulenanordnung mehrere, radial unterschiedlich positionierte Ringe oder Windungen aufweist, so bestimmt sich die radiale Position der Sekundärspulenanordnung regelmäßig nach der Mitte zwischen deren radial innersten und radial äußersten Ringen oder Windungen.

Bevorzugt ist dabei eine Ausführungsform, bei der die Windungen der Primärspulenanordnung zumindest im Wesentlichen gleichmäßig auf die erste Spulensektion und die zweite Spulensektion der Primärspulenanordnung aufgeteilt sind. Mit einer solchen Aufteilung kann in der Regel der radiale Abstand der am weitesten entfernten Windungen der beiden Spulensektionen der Primärspulenanordnung zur Sekundärspulenanordnung gering gehalten werden. Eine im Wesentlichen gleichmäßige Verteilung liegt insbesondere vor, wenn sich die Windungszahlen der ersten und zweiten Spulensektion um 20% oder weniger, bevorzugt 10% oder weniger, unterscheiden, bezogen auf die kleinere Windungszahl.

Bei einer vorteilhaften Ausführungsform umfasst die Sekundärspulenanordnung eine oder mehrere supraleitende, ringförmig geschlossene Einwindungsspulen. Einwindungsspulen sind leicht zu fertigen, insbesondere mit bandförmigen Supraleitern; die ringförmigen Einwindungsspulen können auch ohne Joint ausgebildet werden (durch supraleitende Beschichtung eines ringförmgig geschlossenen Trägers mit Supraleitermaterial). Mehrere supraleitende Einwindungsspulen können radial ineinander oder auch axial übereinander eingesetzt werden, um die Sekundärspulenanordnung auszubilden.

Bevorzugt ist eine Ausführungsform, bei der die Shunt-Anordnung einen oder mehrere geschlossene Shuntringe aufweist, die radial zwischen der ersten Spulensektion und der zweiten Spulensektion der Sekundärspulenanordnung angeordnet sind. In diesem Fall kann mittels des oder der Shuntringe im Quenchfall der Strom aus der Sekundärspulenanordnung über den gesamten Umfang übernommen werden. Der oder die Shuntringe sind meist aus bandförmigem Edelstahl gefertigt.

Vorteilhaft ist dabei vorgesehen, dass die Shunt-Anordnung zwei ineinander geschachtelt angeordnete Shuntringe aufweist, wobei der radial innere Shuntring elektrisch leitend mit der ersten Spulensektion der Sekundärspulenanordnung verbunden ist, und der radial äußere Shuntring mit der zweiten Spulensektion der Sekundärspulenanordnung elektrisch leitend verbunden ist. Hierdurch können die Spulensektionen der Sekundärspulenanordnung separat geschützt werden. Insbesondere ist es möglich, die Shuntringe der ersten und zweiten Spulensektionen in gewissem Umfang thermisch zu entkoppeln, so dass das Durchquenchen der gesamten Sekundärspulenanordnung zeitlich gestreckt werden kann. Man beachte, dass je Spulensektion der Sekundärspulenanordnung auch mehrere, typischerweise axial übereinander angeordnete Shuntringe eingesetzt werden können, um einzelne Ebenen der Sekundärspulenanordnung separat zu schützen.

Bei einer vorteilhaften Ausführungsform weist die Shunt-Anordnung eine Vielzahl von metallischen Brücken auf, die die Shunt-Anordnung mit der ersten und/oder der zweiten Spulensektionen der Sekundärspulenanordnung elektrisch leitend verbinden. Durch eine Kontaktierung mit einzelnen Brücken kann die Ausdehnung einzelner geschützter Bereiche gezielt eingestellt werden. Meist sind über den Umfang einer Spulensektion der Sekundärspulenanordnung sechs oder mehr, bei größeren Fehlerstrombegrenzern (etwa für öffentliche elektrische Versorgungsnetze) auch zwölf oder mehr Brücken vorgesehen. Bei Einwindungsspulen aus bandförmigen Supraleitern ist bevorzugt der Abstand ABS der Brücken in Umfangsrichtung so gewählt, dass im Verhältnis zur Leiterbreite B gilt: 3 ≤ ABS/B ≤ 10. Dies beugt einem Durchbrennen des Supraleiters im Quenchfall vor.

Bevorzugt ist weiterhin eine Ausführungsform, bei der die erste und die zweite Spulensektion der Sekundärspulenanordnung eine unterschiedliche Zahl von supraleitenden, ringförmig geschlossenen Einwindungsspulen aufweisen. Dadurch kann die Stromverteilung in den Einwindungsspulen optimiert werden, insbesondere um die Stromtragfähigkeit des Fehlerstrombegrenzers im Normalbetrieb zu maximieren. Typischerweise unterscheidet sich die Zahl um 10% oder mehr, bevorzugt 20% oder mehr, bezogen auf die kleinere Zahl. Alternativ weisen die erste und die zweite Spulensektion eine gleiche Zahl von supraleitenden, ringförmig geschlossenen Einwindungsspulen auf.

Besonders bevorzugt ist eine Ausführungsform, bei der die Primärspulenanordnung und die Sekundärspulenanordnung zumindest im Wesentlichen rotationssymmetrisch bezüglich einer Achse, insbesondere bezüglich einer vertikalen Achse, aufgebaut sind. Dadurch werden Magnetfeldspitzen vermieden, was eine hohe Stromtragfähigkeit des Fehlerstrombegrenzers ermöglicht. Eine vertikale Ausrichtung vereinfacht den Aufbau, insbesondere aufgrund reduzierter Lagerkräfte.

Bei einer bevorzugten Ausführungsform ist vorgesehen, dass radial innerhalb der ersten Spulensektion der Primärspulenanordnung ein ferromagnetischer Kern angeordnet ist. Mit dem ferromagnetischen Kern wird der magnetische Fluss gebündelt, wodurch die Kompensation des magnetischen Flusses der Primärspulenanordnung im Normalbetrieb verbessert und das Induktivitätsverhältnis (und weiterhin auch das Impedanzverhältnis) zwischen Fehlerbetrieb und Normalbetrieb erhöht werden kann. Der ferromagnetische Kern kann mit unterschiedlichen Formen ausgebildet werden, etwa als Rohr oder Zylinder. Der Innenraum der ersten Spulensektion der Primärspulenanordnung kann ganz oder (bevorzugt) nur teilweise vom Kern erfüllt sein. Bei jedweder Form des ferromagnetischen Kerns kann die Anregung von Abschirmströmen im Kern durch laminierte Strukturen, Schlitze oder ähnliche geeignete Maßnahmen unterdrückt werden.

Vorteilhaft ist auch eine Ausführungsform, bei der die Sekundärspulenanordnung in axialer Richtung sich zumindest genauso weit erstreckt wie die Primärspulenanordnung. Auch dadurch wird die Kompensation des magnetischen Flusses der Primärspulenanordnung im Normalbetrieb verbessert. Meist wird eine im Wesentlichen gleiche axiale Länge von Primärspulenanordnung und Sekundärspulenanordnung gewählt. Falls sich die Spulensektionen einer Spulenanordnung in axialer Richtung unterschiedlich erstrecken, so bestimmt sich die Länge der Spulenanordnung aus den beiden Enden derjenigen Spulensektionen, die jeweils am weitesten auf jeder Seite in axialer Richtung herausragen.

Bei einer vorteilhaften Ausführungsform ist vorgesehen, dass sich die Spulensektionen der Primärspulenanordnung in axialer Richtung unterschiedlich weit erstrecken. Dadurch kann der Magnetfeldverlauf im Fehlerstrombegrenzer optimiert werden, insbesondere für eine maximale Stromtragfähigkeit im Normalbetrieb.

Bevorzugt ist weiterhin eine Ausführungsform, bei der die Sekundärspulenanordnung mit einem Hochtemperatur-Supraleitermaterial, insbesondere YBCO oder BSCCO, gefertigt ist. Dadurch kann die Stromtragfähigkeit des Fehlerstrombegrenzers erhöht werden. Hochtemperatur-Supraleitermaterialien im Sinne der Erfindung sind alle Supraleitermaterialien mit einer Sprungtemperatur von 40 K oder höher.

Eine besonders vorteilhafte Ausführungsform sieht vor, dass die Sekundärspulenanordnung in einem Kryostaten angeordnet ist, und dass die Sekundärspulenanordnung, die erste und zweite Spulensektion der Primärspulenanordnung und der Kryostat so platziert und dimensioniert sind, dass für die Zwischenräume ZR in radialer Richtung zwischen einander gegenüberliegenden Seiten der Sekundärspulenanordnung einerseits und der ersten und zweiten Spulensektionen der Primärspulenanordnung andererseits gilt: ZR < 1/2D_{PS} + 1/2D_{S}, bevorzugt ZR < 1/2D_{PS},
mit D_{PS}: Dicke der den jeweiligen Zwischenraum ZR mit begrenzenden Spulensektion der Primärspulenanordnung in radialer Richtung, und D_{S}: Dicke der den jeweiligen Zwischenraum ZR mit begrenzenden Sekundärspulenanordnung in radialer Richtung. Dadurch ist sichergestellt, dass die Abstandseinsparung aufgrund der Aufteilung der Primärspulenanordnung nicht bereits durch die oben genannten Zwischenräume (die unter anderem durch die Wandstärke des Kryostaten bedingt sind) in erheblichem Umfang zunichtegemacht wird. Im Falle von (etwa in axialer Richtung) veränderlichen Zwischenräumen bezieht sich die Relation auf die gemittelten Zwischenräume; sie kann aber alternativ auch auf die kleinsten Zwischenräume angewandt werden. Besonders bevorzugt sind die Zwischenräume jeweils kleiner oder gleich einem Viertel, ganz besonders bevorzugt einem Achtel, der Dicke D_{PS} der den jeweiligen Zwischenraum mit begrenzenden Spulensektion der Primärspulenanordnung in radialer Richtung. Ebenfalls bevorzugt gilt ZR ≤ 1/4D_{PS} + 1/2D_{S} oder auch ZR ≤ 1/4D_{PS} + 1/4D_{S}. Man beachte, dass pro Sekundärspulenanordnung zwei Zwischenräume vorhanden sind, die den Bedingungen dieser Ausführungsform unterfallen. Man beachte weiterhin, dass verschiedene Zwischenräume ZR unterschiedlich groß sein können, und ebenso die Dicken D_{PS} verschiedener Spulensektionen der Primärspulenanordnung unterschiedlich groß sein können.

Vorteilhaft ist auch eine Ausführungsform, die vorsieht, dass die Primärspulenanordnung N Spulensektionen aufweist, mit N ∈ IN und N ≥ 3, und dass der Fehlerstrombegrenzer N-1 Sekundärspulenanordnungen aufweist, wobei jeweils eine Sekundärspulenanordnung radial zwischen zwei Spulensektionen der Primärspulenanordnung angeordnet ist, insbesondere wobei N=3 oder N=4. Bei dieser Ausführungsform wird die Primärspulenanordnung noch feiner unterteilt, wodurch die Sekundärspulenanordnungen noch näher an die Windungen der Spulensektionen der Primärspulenanordnung heranrücken können; dadurch wird ist ein weiter gesteigertes Induktivitätsverhältnis möglich.

Weitere Vorteile der Erfindung ergeben sich aus der Beschreibung und der Zeichnung. Ebenso können die vorstehend genannten und die noch weiter ausgeführten Merkmale erfindungsgemäß jeweils einzeln für sich oder zu mehreren in beliebigen Kombinationen Verwendung finden. Die gezeigten und beschriebenen Ausführungsformen sind nicht als abschließende Aufzählung zu verstehen, sondern haben vielmehr beispielhaften Charakter für die Schilderung der Erfindung.

### Detaillierte Beschreibung der Erfindung und Zeichnung

Die Erfindung ist in der Zeichnung dargestellt und wird anhand von Ausführungsbeispielen näher erläutert. Es zeigen:
- Fig. 1: eine schematische, kombinierte Schnitt- und Schrägdarstellung eines induktiven Fehlerstrombegrenzers zur allgemeinen Erläuterung;
- Fig. 2a: eine schematische Schnittdarstellung einer ersten Ausführungsform eines erfindungsgemäßen Fehlerstrombegrenzers, mit einer Sekundärspulenanordnung umfassend eine radial innere und eine radial äußere Spulensektion, zwischen denen eine Shunt-Anordnung angeordnet ist;
- Fig. 2b: ein Ausschnitt aus der Ausführungsform von Fig. 2a, in einer schematischen Schrägansicht;
- Fig. 3: eine schematische Schnittdarstellung einer zweiten Ausführungsform eines erfindungsgemäßen Fehlerstrombegrenzers, mit einer Sekundärspulenanordnung umfassend eine radial innere und eine radial äußere Spulensektion, zwischen denen eine radial zweigeteilte Shunt-Anordnung angeordnet ist;
- Fig. 4: eine schematische Schnittdarstellung einer dritten Ausführungsform eines erfindungsgemäßen Fehlerstrombegrenzers, mit einer Sekundärspulenanordnung umfassend eine radial innere und eine radial äußere Spulensektion, zwischen denen eine Shunt-Anordnung angeordnet ist, wobei die Sekundärspulenanordnung in axialer Richtung unterteilt ist;
- Fig. 5a: eine schematische Schnittdarstellung einer vierten Ausführungsform eines erfindungsgemäßen Fehlerstrombegrenzers, mit einer Sekundärspulenanordnung umfassend eine radial innere und eine radial äußere Spulensektion, zwischen denen eine radial zweigeteilte Shunt-Anordnung angeordnet ist, wobei die Sekundärspulenanordnung in axialer Richtung unterteilt ist;
- Fig. 5b: eine schematische Schnittdarstellung einer Variante der vierten Ausführungsform, mit zusätzlichen Brücken zwischen radial benachbarten Shuntririgen;
- Fig. 6: eine schematische Schnittdarstellung eines Fehlerstrombegrenzers zur allgemeinen Erläuterung, wobei die Primärspulenanordnung drei radial beabstandete Spulensektionen aufweist, zwischen denen zwei Sekundärspulenanordnungen angeordnet sind.

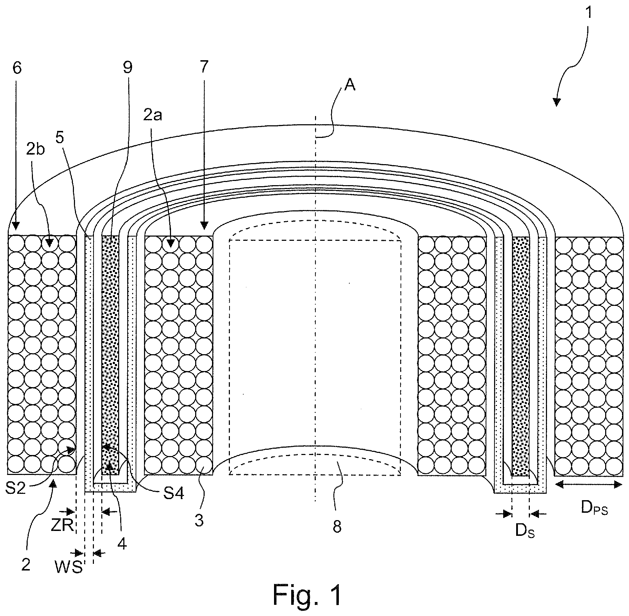

Die **Figur 1** zeigt in einer schematischen Darstellung einen Schnitt durch einen Fehlerstrombegrenzer 1 zur allgemeinen Erläuterung.

Der Fehlerstrombegrenzer 1 ist im Wesentlichen rotationssymmetrisch bezüglich einer vertikalen Achse A aufgebaut. Er umfasst eine normalleitende Primärspulenanordnung 2 mit einer ersten, radial innen gelegenen Spulensektion 2a und einer zweiten, radial außen gelegenen Spulensektion 2b. Die beiden Spulensektionen 2a, 2b umfassen jeweils eine Vielzahl von Windungen 3, wobei im gezeigten Ausführungsbeispiel jede Spulensektion 2a, 2b vier Lagen von Windungen 3 umfasst; die Windungen 3 sind insgesamt gleichmäßig auf die beiden Spulensektionen 2a, 2b aufgeteilt. Die beiden Spulensektionen 2a, 2b sind elektrisch in Serie verschaltet, um einen durch sie fließenden Wechselstrom zu begrenzen. Radial zwischen den beiden Spulensektionen 2a, 2b ist eine supraleitende Sekundärspulenanordnung 4 angeordnet. Die Primärspulenanordnung 2 und die Sekundärspulenanordnung 4 sind bezüglich der Achse A koaxial ausgerichtet und in axialer Richtung gleich lang; es genügt allerdings, wenn diese Orientierung bzw. diese Abmessungen im Wesentlichen eingehalten werden (etwa mit einer gegenseitigen Verkippung bis zu 5°, oder einem axialen Überstand der Sekundär- oder Primärspulenanordnung insgesamt um bis zu 20%).

Die Sekundärspulenanordnung 4 ist in einem Kryostaten 5 angeordnet, dessen Innenraum in nicht näher dargestellter Weise gekühlt wird (beispielsweise mit flüssigem Stickstoff auf 77 K), so dass die Sekundärspulenanordnung 4 bei einer Temperatur ist, die unterhalb der Sprungtemperatur des verwendeten Supraleitermaterials ist. Die Sekundärspulenanordnung 4 umfasst im einfachsten Fall nur eine supraleitend kurzgeschlossene Einwindungsspule 9; alternativ kann die Sekundärspulenanordnung 2 auch mit mehreren Windungen (ggf. auf mehrere Windungslagen verteilt) ausgebildet sein, etwa solenoidförmig gewickelt. Die Windungen der Sekundärspulenanordnung 4 sind dann einzeln und/oder in Gruppen oder zusammen supraleitend kurzgeschlossen.

Falls gewünscht, kann im Inneren der ersten Spulensektion 2a ein Eisenkern 8 (gestrichelt angedeutet) vorgesehen sein.

Die Sekundärspulenanordnung 4 ist hier mittig zwischen der radial äußersten Windungslage 6 und der radial innersten Windungslage 7 angeordnet.

Ein in radialer Richtung gemessener Zwischenraum ZR zwischen den einander zugewandten, gegenüberliegenden Seiten S2 der zweiten Spulensektion 2b der Primärspulenanordnung 2 und S4 der Sekundärspulenanordnung 4 entspricht hier etwa 3/5 der Summe der halbierten Dicke D_{PS} der zweiten Spulensektion 2b und der halbierten Dicke D_{S} der Sekundärspulenanordnung 4; der Zwischenraum ZR entspricht auch lediglich etwa 3/4 der halbierten Dicke D_{PS}. Der Zwischenraum ZR wird im Wesentlichen durch die (gesamte) Wandstärke WS des Kryostaten 5 und die Abstände der zweiten Spulensektion 2b und der Sekundärspulenanordnung 4 vom Kryostaten 5 bestimmt.

Gleiches gilt hierfür einen Zwischenraum zwischen der ersten Spulensektion 2a und der Sekundärspulenanordnung 4 (nicht näher dargestellt). Man beachte, dass in der schematischen Darstellung die radialen Abstände zwischen der Außenwand des Kryostaten 5 und den Spulensektionen 2a, 2b und auch die radialen Abstände zwischen der Sekundärspulenanordnung 4 und der Innenwand des Kryostaten 5 vergrößert dargestellt sind.

Durch die radiale Aufteilung der Primärspulenanordnung 2 und der Platzierung der Sekundärspulenanordnung 4 radial zwischen den Spulensektionen 2a, 2b der Primärspulenanordnung 2 kann der radiale Abstand zwischen der Sekundärspulenanordnung 4 und der am weitesten entfernten Windungslage der Primärspulenanordnung 2 verglichen mit einer Anordnung der Sekundärspulenanordnung radial innerhalb oder radial außerhalb der Primärspulenanordnung deutlich reduziert werden.

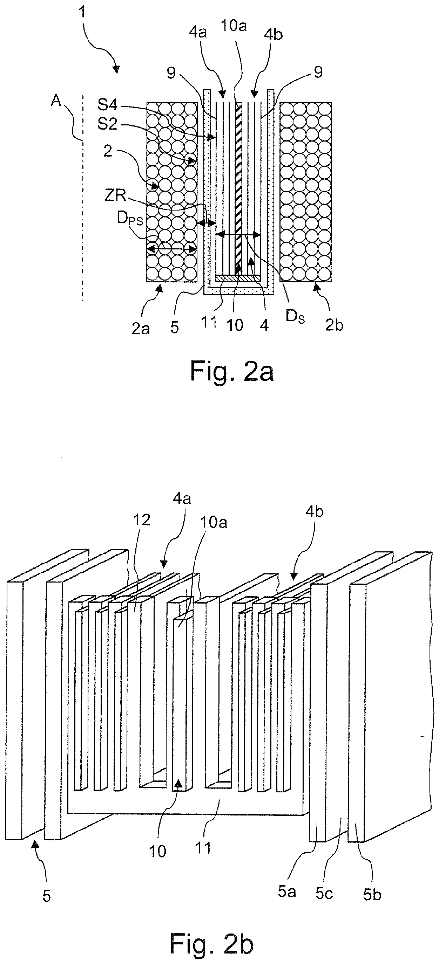

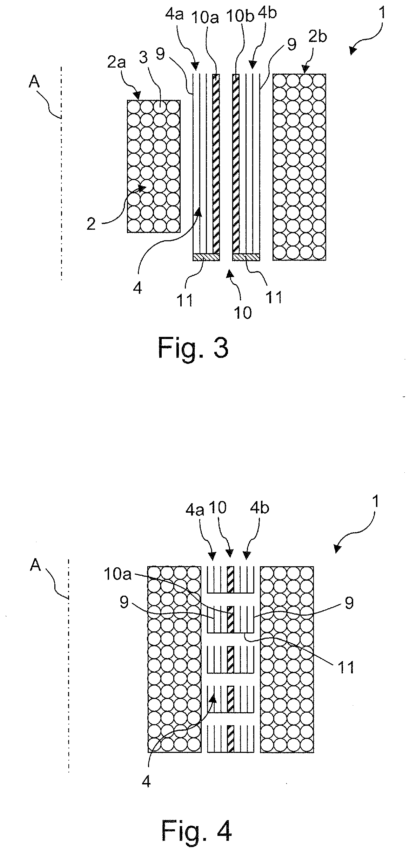

In der **Figur 2a** ist schematisch eine erste Ausführungsform eines erfindungsgemäßen Fehlerstrombegrenzers 1 dargestellt. Zur Vereinfachung ist nur eine Hälfte der Schnittansicht gezeigt (gilt auch für die Figuren 3, 4, 5a, 5b, 6). Es werden vor allem die Unterschiede zum Fehlerstrombegrenzer von Fig. 1 erläutert.

Bei dieser Ausführungsform weist die Sekundärspulenanordnung 4, die in einem Kryostaten 5 angeordnet ist, eine erste, radial innere Spulensektion 4a und eine zweite, radial äußere Spulensektion 4b auf. Jede Spulensektion 4a, 4b umfasst hier drei ineinander angeordnete Einwindungsspulen 9. Zwischen den Spulensektionen 4a, 4b ist eine normalleitende Shunt-Anordnung 10 platziert, die hier einen einzigen, geschlossenen Shuntring 10a umfasst. Die Einwindungsspulen 9 beider Spulensektionen 4a, 4b sind über in Umfangsrichtung verteilte Brücken 11 elektrisch und thermisch miteinander verbunden; der Bereich einer solchen Brücke 11 ist in **Figur 2b** in schematischer Schrägansicht besonders gut zu erkennen. Die Brücke 11 bildet rechenartige Klemmhalterungen 12 für die Einwindungsspulen 9 und den Shuntring 10a aus. Der Kryostat 5 ist hier mit einer Doppelwand 5a, 5b und dazwischenliegendem, evakuierten Kryoisolationsbereich 5c ausgebildet.
Der Shuntring 10a ist durch die supraleitenden Einwindungsspulen 9 der beiden Spulensektionen 4a, 4b der Sekundärspulenanordnung 4 im Normalbetrieb magnetisch sowohl nach radial innen als auch nach radial außen von der Primärspulenanordnung 2 abgeschirmt.

In der in Fig. 2a gezeigten Ausführungsform entspricht der radiale Zwischenraum ZR etwa 4/10 der Summe der halben Dicke D_{PS} der ersten Spulensektion 2a der Primärspulenanordnung 2 und der halben Dicke D_{S} der Sekundärspulenanordnung 4, bezogen auf deren gegenüberliegende, einander zugewandte Seiten S2, S4. Vorliegend entspricht der Zwischenraum ZR weiterhin ca. 3/4 der halben Dicke D_{PS}. Gleiches gilt hier für den Zwischenraum zwischen der zweiten Spulensektion 2b der Primärspulenanordnung 2 und der Sekundärspulenanordnung 4 (nicht näher dargestellt).

Die **Figur 3** zeigt eine zweite Ausführungsform eines erfindungsgemäßen Fehlerstrombegrenzers 1. Zur Vereinfachung wurde der Kryostat für die Sekundärspulenanordnung 4 in der Darstellung weggelassen (gilt auch für die Figuren 4, 5a, 5b und 6). Es werden nur die wesentlichen Unterschiede zur Ausführungsform von Fig. 2a erläutert.

In der in Fig. 3 gezeigten Ausführungsform weist die Shunt-Anordnung 10 zwei radial ineinander angeordnete Shuntringe 10a, 10b auf. Der radial innere Shuntring 10a ist mit den Einwindungsspulen 9 der ersten Spulenanordnung 4a der Sekundärspulenanordnung 4 über Brücken 11 elektrisch und thermisch verbunden, und der radial äußere Shuntring 10b ist mit den Einwindungsspulen 9 der zweiten Spulenanordnung 4b verbunden.

Durch die Trennung der beiden Shuntringe 10a, 10b können die beiden Spulensektionen 4a, 4b der Sekundärspulenanordnung 4 in gewissem Umfang voneinander entkoppelt werden; insbesondere können Quenchprozesse in den beiden Spulensektionen 4a, 4b zeitlich voneinander getrennt werden.

Als weitere Besonderheit ist die radial innere, erste Spulensektion 2a der Primärspulenanordnung 2 gegenüber der Sekundärspulenanordnung 4 und der zweiten Spulensektion 2b der Primärspulenanordnung 2 axial verkürzt, um den Magnetfeldverlauf im Fehlerstrombegrenzer 1 zu optimieren. Die erste Spulensektion 2a hat dementsprechend auch weniger Windungen 3 als die zweite Spulensektion 2b.

Die **Figur 4** zeigt eine dritte Ausführungsform eines erfindungsgemäßen Fehlerstrombegrenzers 1. Es werden wiederum nur die wesentlichen Unterschiede zur Ausführungsform von Fig. 2a erläutert.

Bei dieser Ausführungsform sind die Spulensektionen 4a, 4b der Sekundärspulenanordnung 4 und die Shunt-Anordnung 10 in mehrere axiale Ebenen (hier fünf Ebenen) unterteilt, vgl. die vertikale Achse A. In jeder Ebene sind jeweils ein Shuntring 10a, drei Einwindungsspulen 9 für die innere Spulensektion 4a, drei Einwindungsspulen 9 für die äußere Spulensektion 4b und eine Brücke 11 vorgesehen.

Durch die axiale Unterteilung können auch bei axial ausgedehnten Fehlerstrombegrenzern (etwa im Bereich von 1-2 m axiale Höhe und mehr) bandförmige Supraleiter mit üblichen Leiterbreiten (meist um 1 cm bis 4 cm, in axialer Richtung) eingesetzt werden; in der Praxis sind meist zehn oder mehr, oft auch vierzig oder mehr Ebenen vorgesehen.

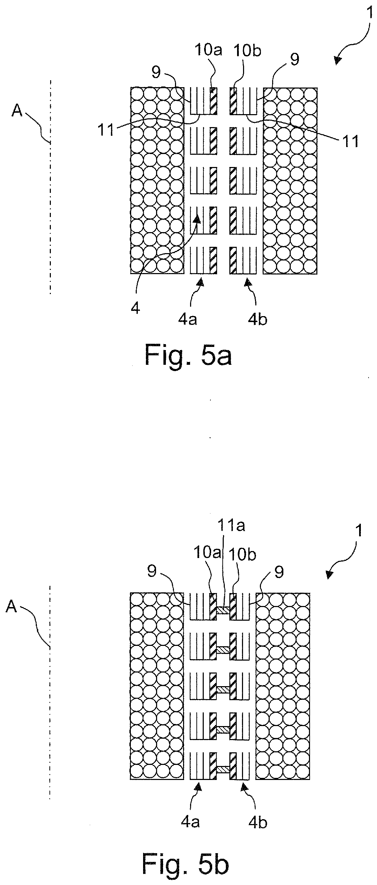

Wie in der Ausführungsform des Fehlerstrombegrenzers 1 von **Figur 5a** ersichtlich, kann innerhalb einer jeden Ebene auch noch eine radiale Unterteilung stattfinden. Die jeweils radial inneren Einwindungsspulen 9 der ersten Spulensektion 4a der Sekundärspulenanordnung 4 und ein radial innerer Shuntring 10a sind dann über eine Brücke 11 verbunden, und ebenso sind die radial äußeren Einwindungsspulen 9 der zweiten Spulensektion 4b und ein radial äußerer Shuntring 10b über eine Brücke 11 miteinander verbunden.

In einer Variante dieser Ausführungsform, welche in **Figur 5b** gezeigt ist, sind die Shuntringe 10a, 10b einer Ebene über zusätzliche Brücken 11a elektrisch und vor allem thermisch miteinander verbunden. Über die zusätzlichen Brücken 11a kann eingestellt werden, wie schnell sich ein Quench in einer der beiden Spulensektionen 4a, 4b durch die vom Quench verursachte Stromumverteilung auf die andere Spulensektion 4a, 4b ausbreitet. In der gezeigten Variante sind hier außerdem in der radial äußeren Spulensektion 4b jeweils nur zwei Einwindungsspulen 9 je Ebene vorgesehen (statt drei in der Ausführungsform von Fig. 5a).

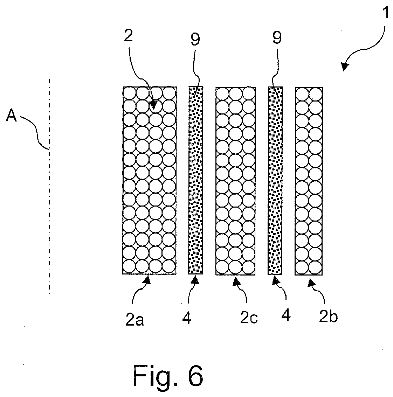

**Figur 6** zeigt schließlich zur allgemeinen Erläuterung einen Fehlerstrombegrenzer 1, bei dem die Primärspulenanordnung 2 insgesamt drei Spulensektionen 2a, 2b, 2c aufweist. Zwischen der radial innersten Spulensektion 2a und der radial mittleren Spulensektion 2c und auch zwischen der mittleren Spulensektion 2c und der radial äußeren Spulensektion 2b ist jeweils eine supraleitende, kurzgeschlossene Sekundärspulensektion 4 angeordnet. Die Sekundärspulensektionen 4 sind hier jeweils mit einer Einwindungsspule 9 dargestellt; erfindungsgemäß werden sie aber wie in den Figuren 2a bis 5b dargestellt ausgebildet.

Man beachte weiterhin, dass hier die Spulensektionen 2a, 2b, 2c der Primärspulenanordnung 2 jeweils eine unterschiedliche Zahl von Windungslagen (hier vier, drei und zwei) aufweisen, wobei nach radial außen die Zahl der Windungslagen je Spulensektion 2a, 2b, 2c abnimmt. In der Praxis sind im Rahmen der Erfindung im Allgemeinen meist dreißig oder mehr, oft sechzig oder mehr Windungslagen je Spulensektion der Primärspulenanordnung vorgesehen, und die Spulensektionen der Primärspulenanordnung (bzw. deren Windungslagen) haben eine merkliche radiale Dicke, meist 6 cm und mehr, oft 15 cm und mehr.

Ein erfindungsgemäßer induktiver Fehlerstrombegrenzer kann dazu eingesetzt werden, bei Betriebsstörungen (etwa Kurzschlüssen) einen Stromanstieg in einer zu sichernden Stromleitung, in der Wechselstrom transportiert wird, zu begrenzen oder zu verhindern. Die Stromleitung kann insbesondere zu einem öffentlichen elektrischen Versorgungsnetz gehören oder auch in einem Umspannwerk angeordnet sein.

## Patentansprüche

1. Induktiver Fehlerstrombegrenzer (1), umfassend
- eine normalleitende Primärspulenanordnung (2) mit einer Vielzahl von Windungen (3), und
- eine supraleitende, kurzgeschlossene Sekundärspulenanordnung (4), wobei die Primärspulenanordnung (2) und die Sekundärspulenanordnung (4) zumindest im Wesentlichen koaxial zueinander und zumindest teilweise ineinander geschachtelt angeordnet sind,
wobei die Primärspulenanordnung (2) eine erste Spulensektion (2a) und eine zweite Spulensektion (2b) umfasst,
wobei die Windungen (3) der ersten Spulensektion (2a) der Primärspulenanordnung (2) radial innerhalb der Sekundärspulenanordnung (4) angeordnet sind,
und wobei die Windungen (3) der zweiten Spulensektion (2b) der Primärspulenanordnung (2) radial außerhalb der Sekundärspulenanordnung (4) angeordnet sind,
wobei die Sekundärspulenanordnung (4) eine erste Spulensektion (4a) und eine zweite Spulensektion (4b) umfasst,
wobei die erste Spulensektion (4a) der Sekundärspulenanordnung (4) radial innerhalb der zweiten Spulensektion (4b) der Sekundärspulenanordnung (4) angeordnet ist,
**dadurch gekennzeichnet,**
**dass** eine normalleitende Shunt-Anordnung (10) radial zwischen der ersten Spulensektion (4a) und der zweiten Spulensektion (4b) der Sekundärspulenanordnung (4) angeordnet ist.

2. Fehlerstrombegrenzer (1) nach Anspruch 1, **dadurch gekennzeichnet, dass** die Sekundärspulenanordnung (4) mittig zwischen einer innersten Windungslage (7) der ersten Spulensektion (2a) der Primärspulenanordnung (2) und einer äußersten Windungslage (6) der zweiten Spulensektion (2b) der Primärspulenanordnung (2) angeordnet ist.

3. Fehlerstrombegrenzer (1) nach einem der vorhergehenden Ansprüche, **dadurch gekennzeichnet, dass** die Windungen (3) der Primärspulenanordnung (2) zumindest im Wesentlichen gleichmäßig auf die erste Spulensektion (2a) und die zweite Spulensektion (2b) der Primärspulenanordnung (2) aufgeteilt sind.

4. Fehlerstrombegrenzer (1) nach einem der vorhergehenden Ansprüche, **dadurch gekennzeichnet, dass** die Sekundärspulenanordnung (4) eine oder mehrere supraleitende, ringförmig geschlossene Einwindungsspulen (9) umfasst.

5. Fehlerstrombegrenzer (1) nach einem der vorhergehenden Ansprüche, **dadurch gekennzeichnet, dass** die Shunt-Anordnung (10) einen oder mehrere geschlossene Shuntringe (10a, 10b) aufweist, die radial zwischen der ersten Spulensektion (4a) und der zweiten Spulensektion (4b) der Sekundärspulenanordnung (4) angeordnet sind.

6. Fehlerstrombegrenzer (1) nach Anspruch 5, **dadurch gekennzeichnet, dass** die Shunt-Anordnung (10) zwei ineinander geschachtelt angeordnete Shuntringe (10a, 10b) aufweist, wobei der radial innere Shuntring (10a) elektrisch leitend mit der ersten Spulensektion (4a) der Sekundärspulenanordnung (4) verbunden ist, und der radial äußere Shuntring (10b) mit der zweiten Spulensektion (4b) der Sekundärspulenanordnung (4) elektrisch leitend verbunden ist.

7. Fehlerstrombegrenzer (1) nach einem der vorhergehenden Ansprüche, **dadurch gekennzeichnet, dass** die Shunt-Anordnung (10) eine Vielzahl von metallischen Brücken (11) aufweist, die die Shunt-Anordnung (10) mit der ersten und/oder der zweiten Spulensektionen (4a, 4b) der Sekundärspulenanordnung (4) elektrisch leitend verbindet.

8. Fehlerstrombegrenzer (1) nach einem der vorhergehenden Ansprüche, **dadurch gekennzeichnet, dass** die erste und die zweite Spulensektion (4a, 4b) der Sekundärspulenanordnung (4) eine unterschiedliche Zahl von supraleitenden, ringförmig geschlossenen Einwindungsspulen (9) aufweisen.

9. Fehlerstrombegrenzer (1) nach einem der vorhergehenden Ansprüche , **dadurch gekennzeichnet, dass** die Primärspulenanordnung (2) und die Sekundärspulenanordnung (4) zumindest im Wesentlichen rotationssymmetrisch bezüglich einer Achse (A), insbesondere einer vertikalen Achse (A), aufgebaut sind.

10. Fehlerstrombegrenzer (4) nach einem der vorhergehenden Ansprüche, **dadurch gekennzeichnet, dass** radial innerhalb der ersten Spulensektion (2a) der Primärspulenanordnung (2) ein ferromagnetischer Kern (8) angeordnet ist.

11. Fehlerstrombegrenzer (1) nach einem der vorhergehenden Ansprüche, **dadurch gekennzeichnet, dass** die Sekundärspulenanordnung (4) in axialer Richtung sich zumindest genauso weit erstreckt wie die Primärspulenanordnung (2).

12. Fehlerstrombegrenzer (1) nach einem der vorhergehenden Ansprüche, **dadurch gekennzeichnet, dass** sich die Spulensektionen (2a, 2b) der Primärspulenanordnung (2) in axialer Richtung unterschiedlich weit erstrecken.

13. Fehlerstrombegrenzer (1) nach einem der vorhergehenden Ansprüche, **dadurch gekennzeichnet, dass** die Sekundärspulenanordnung (4) mit einem Hochtemperatur-Supraleitermaterial, insbesondere YBCO oder BSCCO, gefertigt ist.

14. Fehlerstrombegrenzer (1) nach einem der vorhergehenden Ansprüche, **dadurch gekennzeichnet, dass** die Sekundärspulenanordnung (4) in einem Kryostaten (5) angeordnet ist, und dass die Sekundärspulenanordnung (4), die erste und zweite Spulensektion (2a, 2b) der Primärspulenanordnung (2) und der Kryostat (5) so platziert und dimensioniert sind, dass für die Zwischenräume ZR in radialer Richtung zwischen einander gegenüberliegenden Seiten (S2, S4) der Sekundärspulenanordnung (4) einerseits und der ersten und zweiten Spulensektionen (2a, 2b) der Primärspulenanordnung (2) andererseits gilt: ZR < 1/2D_{PS} + 1/2D_{S}, bevorzugt ZR < 1/2D_{PS},
mit D_{PS}: Dicke der den jeweiligen Zwischenraum ZR mit begrenzenden Spulensektion (2a, 2b) der Primärspulenanordnung (2) in radialer Richtung, und D_{S}: Dicke der den jeweiligen Zwischenraum ZR mit begrenzenden Sekundärspulenanordnung (4) in radialer Richtung.

15. Fehlerstrombegrenzer (1) nach einem der vorhergehenden Ansprüche, **dadurch gekennzeichnet,**
**dass** die Primärspulenanordnung (2) N Spulensektionen (2a, 2b, 2c) aufweist, mit N ∈ IN und N ≥ 3, und dass der Fehlerstrombegrenzer (1) N-1 Sekundärspulenanordnungen (4) aufweist,
wobei jeweils eine Sekundärspulenanordnung (4) radial zwischen zwei Spulensektionen (2a, 2b, 2c) der Primärspulenanordnung (2) angeordnet ist,
insbesondere wobei N=3 oder N=4.

## Claims

1. Inductive fault current limiter (1), comprising
- a normally conducting primary coil assembly (2) with a multiplicity of turns (3), and
- a superconducting, short-circuited secondary coil assembly (4),
wherein the primary coil assembly (2) and the secondary coil assembly (4) are disposed at least substantially coaxially with respect to each other and at least partially interleaved in each other,
wherein the primary coil assembly (2) comprises a first coil section (2a) and a second coil section (2b),
wherein the turns (3) of the first coil section (2a) of the primary coil assembly (2) are disposed radially inside the secondary coil assembly (4),
and wherein the turns (3) of the second coil section (2b) of the primary coil assembly (2) are arranged radially outside the secondary coil assembly (4),
wherein the secondary coil assembly (4) comprises a first coil section (4a) and a second coil section (4b),
wherein the first coil section (4a) of the secondary coil assembly (4) is disposed radially inside the second coil section (4b) of the secondary coil assembly (4),
**characterized in that**
a normally conducting shunt configuration (10) is disposed radially between the first coil section (4a) and the second coil section (4b) of the secondary coil assembly (4).

2. Fault current limiter (1) according to claim 1, **characterized in that** the secondary coil assembly (4) is disposed centrally between an innermost turn layer (7) of the first coil section (2a) of the primary coil assembly (2) and an outermost turn layer (6) of the second coil section (2b) of the primary coil assembly (2).

3. Fault current limiter (1) according to any one of the preceding claims, **characterized in that** the turns (3) of the primary coil assembly (2) are distributed at least substantially evenly between the first coil section (2a) and the second coil section (2b) of the primary coil assembly (2).

4. Fault current limiter (1) according to any one of the preceding claims, **characterized in that** the secondary coil assembly (4) comprises one or more superconducting, ring-shaped closed single-turn coils (9).

5. Fault current limiter (1) according to any one of the preceding claims, **characterized in that** the shunt configuration (10) comprises one or more closed shunt rings (10a, 10b) which are disposed radially between the first coil section (4a) and the second coil section (4b) of the secondary coil assembly (4).

6. Fault current limiter (1) according to claim 5, **characterized in that** the shunt configuration (10) has two shunt rings (10a, 10b) disposed interleaved in each other, wherein the radially inner shunt ring (10a) is electrically conductively connected to the first coil section (4a) of the secondary coil assembly (4) and the radially outer shunt ring (10b) is electrically conductively connected to the second coil section (4b) of the secondary coil assembly (4).

7. Fault current limiter (1) according to any one of the preceding claims, **characterized in that** the shunt configuration (10) comprises a multiplicity of metallic jumpers (11) which electrically conductively connect the shunt configuration (10) to the first and/or second coil section (4a, 4b) of the secondary coil assembly (4).

8. Fault current limiter (1) according to any one of the preceding claims, **characterized in that** the first and second coil sections (4a, 4b) of the secondary coil assembly (4) have a different number of superconducting, ring-shaped closed single-turn coils (9).

9. Fault current limiter (1) according to any one of the preceding claims, **characterized in that** the primary coil assembly (2) and the secondary coil assembly (4) are constructed at least substantially rotationally symmetrically with respect to an axis (A), in particular to a vertical axis (A).

10. Fault current limiter (4) according to any one of the preceding claims, **characterized in that** a ferromagnetic core (8) is disposed radially inside the first coil section (2a) of the primary coil assembly (2).

11. Fault current limiter (1) according to any one of the preceding claims, **characterized in that** the secondary coil assembly (4) extends at least a same distance in an axial direction as the primary coil assembly (2).

12. Fault current limiter (1) according to any one of the preceding claims, **characterized in that** the coil sections (2a, 2b) of the primary coil assembly (2) extend different distances in an axial direction.

13. Fault current limiter (1) according to any one of the preceding claims, **characterized in that** the secondary coil assembly (4) is made of a high-temperature superconducting material, in particular YBCO or BSCCO.

14. Fault current limiter (1) according to any one of the preceding claims, **characterized in that** the secondary coil assembly (4) is arranged in a cryostat (5) and the secondary coil assembly (4), the first and the second coil sections (2a, 2b) of the primary coil assembly (2) and the cryostat (5) are positioned and dimensioned such that, for interstices ZR in a radial direction between mutually opposite sides (S2, S4) of the secondary coil assembly (4) on the one hand and the first and second coil sections (2a, 2b) of the primary coil assembly (2) on the other hand, the following applies: ZR<1/2D_{PS} + 1/2D_{S}, preferably ZR<1/2D_{PS},
with D_{PS}: thickness of the coil section (2a, 2b) of the primary coil assembly (2) in a radial direction which contributes to limiting the respective interstice ZR, and Ds: thickness of the secondary coil assembly (4) in a radial direction which contributes to limiting the respective interstice ZR.

15. Fault current limiter (1) according to any one of the preceding claims, **characterized in that** the primary coil assembly (2) comprises N coil sections (2a, 2b, 2c), where N ∈ IN and N≥3, and that the fault current limiter (1) comprises N-1 secondary coil assemblies (4), wherein one secondary coil assembly (4) is disposed in each case radially between two coil sections (2a, 2b, 2c) of the primary coil assembly (2), in particular wherein N=3 or N=4.

## Revendications

1. Limiteur de courant de défaut inductif (1) comprenant
- un arrangement normalement conducteur de bobine primaire (2) avec une multitude de spires (3) et
- un arrangement supraconducteur court-circuité de bobine secondaire (4), sachant que l'arrangement de bobine primaire (2) et l'arrangement de bobine secondaire (4) sont disposés au moins essentiellement coaxialement l'un par rapport à l'autre et au moins partiellement imbriqués l'un dans l'autre,
sachant que l'arrangement de bobine primaire comprend une première section de bobine (2a) et
une seconde section de bobine (2b),
sachant que les spires (3) de la première section de bobine (2a) de l'arrangement de bobine primaire (2) sont disposées radialement à l'intérieur de l'arrangement de bobine secondaire (4),
et sachant que les spires (3) de la seconde section de bobine (2b) de l'arrangement de bobine primaire (2) sont disposées radialement à l'extérieur de l'arrangement de bobine secondaire (4),
sachant que l'arrangement de bobine secondaire (4) comprend une première section de bobine (4a) et une seconde section de bobine (4b),
sachant que la première section de bobine (4a) de l'arrangement de bobine secondaire (4) est disposée radialement à l'intérieur de la seconde section de bobine (4b) de l'arrangement de bobine secondaire (4),
**caractérisé en ce**
**qu'**un arrangement shunt (10) normalement conducteur est disposé radialement entre la première section de bobine (4a) et la seconde section de bobine (4b) de l'arrangement de bobine secondaire (4).

2. Limiteur de courant de défaut (1) selon la revendication 1, **caractérisé en ce que** l'arrangement de bobine secondaire (4) est disposé au centre entre la couche de spire la plus intérieure (7) de la première section de bobine (2a) de l'arrangement de bobine primaire (2) et la couche de spire la plus extérieure (6) de la seconde section de bobine (2b) de l'arrangement de bobine primaire (2).

3. Limiteur de courant de défaut (1) selon une des revendications précédentes, **caractérisé en ce que** les spires (3) de l'arrangement de bobine primaire (2) sont réparties au moins essentiellement uniformément sur la première section de bobine (2a) et la seconde section de bobine (2b) de l'arrangement de bobine primaire (2).

4. Limiteur de courant de défaut (1) selon une des revendication précédentes, **caractérisé en ce que** l'arrangement de bobine secondaire (4) comprend une ou plusieurs bobines monospires (9) supraconductrices, fermées en forme d'anneau.

5. Limiteur de courant de défaut (1) selon une des revendication précédentes, **caractérisé en ce que** l'arrangement shunt (10) présente un ou plusieurs anneaux shunt fermés (10a, 10b) qui sont disposés radialement entre la première section de bobine (4a) et la seconde section de bobine (4b) de l'arrangement de bobine secondaire (4).

6. Limiteur de courant de défaut (1) selon la revendication 5, **caractérisé en ce que** l'arrangement shunt (10) présente deux anneaux shunt (10a, 10b) imbriqués l'un dans l'autre, sachant que l'anneau shunt radialement intérieur (10a) est relié de manière électriquement conductrice à la première section de bobine (4a) de l'arrangement de bobine secondaire (4) et que l'anneau shunt radialement extérieur (10b) est relié de manière électriquement conductrice à la seconde section de bobine (4b) de l'arrangement de bobine secondaire (4).

7. Limiteur de courant de défaut (1) selon une des revendications précédentes, **caractérisé en ce que** l'arrangement shunt (10) présente une multitude de ponts métalliques (11) qui relie de manière électriquement conductrice l'arrangement shunt (10) à la première et/ou à la seconde section de bobine (4a, 4b) de l'arrangement de bobine secondaire (4).

8. Limiteur de courant de défaut (1) selon une des revendications précédentes, **caractérisé en ce que** la première et la seconde section de bobine (4a, 4b) de l'arrangement de bobine secondaire (4) comprend un nombre différent de bobines monospires (9) supraconductrices, fermées en forme d'anneau.

9. Limiteur de courant de défaut (1) selon une des revendications précédentes, **caractérisé en ce que** l'arrangement de bobine primaire (2) et l'arrangement de bobine secondaire (4) sont montés au moins essentiellement de manière rotosymétrique par rapport à un axe (A), notamment un axe vertical (A).

10. Limiteur de courant de défaut (1) selon une des revendications précédentes, **caractérisé en ce qu'**un noyau ferromagnétique (8) est disposé radialement à l'intérieur de la première section de bobine (2a) de l'arrangement de bobine primaire (2).

11. Limiteur de courant de défaut (1) selon une des revendications précédentes, **caractérisé en ce que** l'arrangement de bobine secondaire (4) s'étend dans le sens axial au moins aussi loin que l'arrangement de bobine primaire (2).

12. Limiteur de courant de défaut (1) selon une des revendications précédentes, **caractérisé en ce que** les sections de bobine (2a, 2b) de l'arrangement de bobine primaire (2) s'étendent différemment loin dans le sens axial.

13. Limiteur de courant de défaut (1) selon une des revendications précédentes, **caractérisé en ce que** l'arrangement de bobine secondaire (4) contient un matériau supraconducteur à haute température, notamment YBCO ou BSCCO.

14. Limiteur de courant de défaut (1) selon une des revendications précédentes, **caractérisé en ce que** l'arrangement de bobine secondaire (4) est disposé dans un cryostat (5) et que l'arrangement de bobine secondaire (4), la première section et la seconde section de bobine (2a, 2b) de l'arrangement de bobine secondaire (2) et le cryostat (5) sont placés et dimensionnés de telle sorte que s'applique pour les espaces intermédiaires ZR dans le sens radial entre des côtés opposés (S2, S4) de l'arrangement de bobine secondaire (4) d'une part et les première et seconde sections de bobine (2a, 2b) de l'arrangement de bobine primaire (2) d'autre part: ZR < 1/2D_{PS} + 1/2D_{S}, de préférence ZR < 1/2D_{PS},
où D_{PS}: épaisseur de la section de bobine (2a, 2b) délimitant l'espace intermédiaire respectif ZR de l'arrangement de bobine primaire (2) dans le sens radial, et D_{S}: épaisseur de l'arrangement de bobine secondaire (4) délimitant l'espace intermédiaire respectif ZR dans le sens radial.

15. Limiteur de courant de défaut (1) selon une des revendications précédentes, **caractérisé en ce que**
l'arrangement de bobine primaire (2) présente N sections de bobine (2a, 2b, 2c), avec N ∈ IN et N > 3, et que le limiteur de courant de défaut (1) présente N-1 arrangements de bobine secondaire (4),
sachant que respectivement un arrangement de bobine secondaire (4) est disposé radialement entre deux sections de bobine (2a, 2b, 2c) de l'arrangement de bobine primaire (2), notamment sachant que N=3 ou N=4.
